(19) Europäisches Patentamt

European Patent Office

Office européen des brevets

(11) Veröffentlichungsnummer: **0 233 514**
**B1**

(12) **EUROPÄISCHE PATENTSCHRIFT**

(45) Veröffentlichungstag der Patentschrift:
**18.07.90**

(21) Anmeldenummer: **87101077.3**

(22) Anmeldetag: **27.01.87**

(51) Int. Cl.⁵: **B60B 17/00,** B61H 5/00,
F16D 65/12

(54) **Rad für kleinrädrige Schienenfahrzeuge.**

(30) Priorität: **04.02.86  DE 3603280**

(43) Veröffentlichungstag der Anmeldung:
**26.08.87 Patentblatt 87/35**

(45) Bekanntmachung des Hinweises auf die Patenterteilung:
**18.07.90 Patentblatt 90/29**

(84) Benannte Vertragsstaaten:
**AT CH DE LI**

(56) Entgegenhaltungen:
**DE-B- 1 151 829**
**FR-A- 2 145 172**

(73) Patentinhaber: **Schmiedewerke Krupp-Klöckner GmbH,
Alleestrasse 70, D-4630 Bochum 1(DE)**

(72) Erfinder: **Schneider, Jürgen, Dr.-Ing., Am
Gartenkamp 31, D-4630 Bochum(DE)**
Erfinder: **Berneiser, Karl-Heinz, Am Chursbusch 41,
D-4630 Bochum(DE)**
Erfinder: **Murawa, Franz, Dipl.-Ing., Kaiserstrasse 63,
D-4690 Herne(DE)**
Erfinder: **Rittinghaus, Rolf-Klaus, Dipl.-Ing.,
Eichenkamp 1, D-4507 Hasbergen(DE)**

(74) Vertreter: **Patentanwaltsbüro Cohausz & Florack,
Postfach 14 01 20 Schumannstrasse 97,
D-4000 Düsseldorf 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Rad für kleinrädrige Schienenfahrzeuge, wie Niederflurwagen, gemäß dem Oberbegriff des Hauptanspruches.

Schienengebundene Niederflurfahrzeuge, wie z.B. Huckepackwagen für Autoreisezüge, haben wegen der niedrigen Ladefläche Räder mit einem Laufkranzdurchmesser von höchstens 400 mm. Wegen der hohen Geschwindigkeit, insbesondere von Autoreisezügen, werden die Räder über beide Radflanken erfassende Scheibenbremsen gebremst.

Zu diesem Zweck ist bei einem als einstückiges Vollrad ausgebildeten Rad vorgesehen, daß die gerade Radscheibe eine der Breite des Radreifens entsprechende Dicke aufweist, so daß die Seitenflanken des Radreifens und die Flanken der Radscheibe als radiale Reibflächen für die Bremsklötze der Scheibenbremsen dienen. Da die Breite der so gebildeten Ringreibfläche jedoch klein ist, muß die Bremskraft zum Abbremsen des Rades durch sehr hohe Bremsdrücke aufgebracht werden. Dadurch wird das Radmaterial im Reifen und in der Scheibe jedoch so stark aufgeheizt, daß Wärmerisse die Folge sind, die bei stärkerer Ausweitung ein Auswechseln des Rades erforderlich machen. Bei der starken Erwärmung des Rades können sich außerdem die mit organischen Bindemitteln versehenen Bremsklötze zersetzen.

Um die beim Bremsen eines "kleinen Rades" entstehende Bremswärme vom Radkörper besser ableiten zu können, schlägt die DE-B 1 151 829, entsprechend den gattungsgemäßen Merkmalen, radiale ebene Ringreibflächen vor, die mit Abstand von der Radscheibe so angeordnet sind, daß die Reibflächen mit den als Reibflächen ausgenutzten Seitenflanken des Radreifens bündig zusammenwirken. Die die Reibflächen bildenden Reibringe sind bei dieser Konstruktion mit ihrem Außendurchmesser in den Innenzylinder des Radreifens beidseitig der Radscheibe eingepreßt. Mit ihrem Innendurchmesser halten sie einen Abstand zur Radnabe, so daß in den Hohlraum zwischen den Reibringen und der Radscheibe Kühlluft eintreten kann. Bei dieser Konstruktion ist jedoch die Preßsitzverbindung zwischen Radreifen und Reibringen bei durch starkes Bremsen auftretender höherer Erwärmung von Radreifen und Reibringen gefährdet, so daß eine sichere Übertragung der Bremsmomente auf den Radkörper nicht mehr gewährleistet ist.

Da bei diesem Rad der Reifen auf der Radscheibenfelge durch Warmaufschrumpfen befestigt ist, kann die Demontage eines abgenutzten Reifens und / oder abgenutzter Reibringe und Remontage entsprechender Neuteile nur nach Ausbau des jeweiligen Radsatzes mittels besonderer Vorrichtungen - Wärmfeuer zum Aufschrumpfen, Vorrichtungen zum Ab- und Aufziehen des Reifens, zum Einpressen der Reibringe sowie zum Einwalzen des den Reifen sichernden Sprengrings - erfolgen.

Die Demontage und Remontage eines solchen Rades ist daher mit besonderem Aufwand verbunden.

Aus dem DE-U 18 91 459 ist ferner ein "kleines" Schienenrad mit Bremsscheiben bekannt, bei welchem Reifen, Scheibe und Nabe aus einem Gußstück bestehen und die Seitenflächen des Radreifens durch beiderseits angegossene Bremsringe nach der Nabe zu verlängert sind, wobei zwischen den Bremsringen und der Radscheibe ein durch Öffnungen mit der Außenluft verbundener Hohlraum angeordnet ist. Trotz der so gegebenen Luftkühlung der Bremsringe verschleißt ein solches gegossenes Rad an der Reifenlauffläche wesentlich schneller als ein gewalztes oder geschmiedetes Rad, weshalb es sich in der Praxis nicht durchsetzen konnte.

Die weiterhin im DE-U 18 91 459 aufgezeigte Möglichkeit, diesem Verschleiß durch Aufschrumpfen einer besonderen gewalzten Radbandage auf den Radreifen zu begegnen, erfordert den gleichen zusätzlichen Arbeitsaufwand bei der De- und Remontage einer abgenutzten Bandage, wie vorstehend zur DE-B 11 51 829 geschildert.

Es ist Aufgabe der vorliegenden Erfindung, ein Rad der eingangs genannten Art, bei dem mit den als Reibflanken ausgebildeten Seitenflächen des Radreifens zusammenwirkende, beidseitig mit Abstand von der Radscheibe angeordnete Reibringflächen vorgesehen sind, so auszugestalten, daß bei leichter Austauschbarkeit des Radreifens eine sichere Verbindung der Reibringe mit dem Radkörper auch bei starker Bremserwärmung gewährleistet ist.

Gelöst wird die Aufgabe durch die kennzeichnenden Merkmale des Hauptanspruchs. Ausgestaltungen der Erfindung sind in den abhängigen Patentansprüchen enthalten.

Ein scheibengebremstes Rad mit den erfindungsgemäßen Merkmalen ist mit Bezug auf seine Einzelteile einfach und billig herzustellen.

Der Radreifen und der an seiner Außenseite vorgesehene ringförmige, sich zur Nabe hin erstreckende Ansatz bilden ein schüsselförmiges, im Gesenk einstückig geschmiedetes Bauteil.

Beim Zusammenbau eines eine Radachse und zwei Räder aufweisenden Radsatzes wird dieses Bauteil auf den vorab auf der Radachse befestigten Scheibenteil eines jeden Rades von der Rad(satz)außenseite her aufgeschoben. Durch Anlage der kegelstumpfförmig ausgestalteten Innenwandung des Radreifens gegen die entsprechend kegelstumpfförmige Außenringfläche der Radscheibe sitzt der Radreifen mit Kegelpaßsitz auf der Radscheibe auf. Genau eingestellt und gesichert wird dieser Preßsitz mittels die Radscheibe durchdringender Schraubverbindungen, die die innenliegende spurkranzseitige separate Bremsscheibe eines jeden Rades und den Ansatz des Radreifens axial gegeneinander verspannen. Beim Anziehen der Schraubbolzen wird die spurkranzseitige Bremsscheibe mit ihren Distanznocken gegen die Radscheibe gedrückt. Gleichzeitig wird der Radreifen mittels der Schraubbolzen über die kegelstumpfförmige Außenringfläche der Radscheibe gezogen, bis seine Spurkranzflanke mit der Außenflanke der Bremsscheibe fluchtet.

Die gegenüber der Radachse mit 3 bis 8° gewählte Neigung der sich kegelstumpfförmig zur Radaußenseite hin verjüngenden Außenringfläche der Radscheibe gewährleistet eine genaue kraftschlüssige Justierung des Reifens auf der Scheibe.

Für die Nachrüstung bereits im Verkehr befindlicher Radsätze mit erfindungsgemäß ausgestalteten Rädern ist vorgesehen, die Räder mit Nabenschrumpfsitz auf der Radachse zu befestigen, um die Radachse mit den vorgegebenen Nabensitzen wiederverwenden zu können.

Bei erstmaliger Fertigung eines Radsatzes für kleinrädrige Schienenfahrzeuge mit zwei auf einer Radachse befestigten Rädern mit den erfindungsgemäßen Konstruktionsmerkmalen ist es vorteilhaft, wenn die Radnabe eines jeden Rades mit zugehöriger Radscheibe und die Radachse einstückig sind. Die Scheibenteile der Räder und die Radachse sind als ein Teil geschmiedet, wodurch das sonst erforderliche Aufschrumpfen der Scheibenteile auf die Radachse entfällt.

Die Dimensionierung der Radscheibe gemäß den Merkmalen des Anspruchs 3 ergibt einerseits eine ausreichende Breite der als Tragfläche (Felge) für den Radreifen dienenden kegelstumpfförmigen Außenringfläche der Radscheibe, andererseits einen für die Bemessung der von den Außenflanken des mit Abstand zur Radscheibe angeordneten Radreifenansatzes und der spurkranzseitigen Bremsscheibe gebildeten Ringreibflächen ausreichenden radialen Abstand zwischen Radreifen und Nabe.

Die spurkranzseitige Bremsscheibe hat einen Außendurchmesser, der geringer ist als der Innendurchmesser des Radreifens am Spurkranz. Der so zwischen Radreifen und Außendurchmesser der Bremsscheibe verbleibende Ringspalt verhindert, daß in diesem Bereich beim Bremsen durch die unterschiedlichen Wärmeausdehnungskoeffizienten von Radreifen einerseits und Bremsscheibe andererseits Wärmespannungen auftreten. Das wäre nämlich der Fall, wenn sich die Bremsscheibe mit ihrem Außendurchmesser am Innendurchmesser des Radreifens abstützen würde. Außerdem ermöglicht dieser Ringspalt einen guten Abfluß der Kühlluft, die von der Nabe her um die Distanznocken herum in den Hohlraum zwischen Radscheibe und Bremsscheibe während der Fahrt eingesaugt wird.

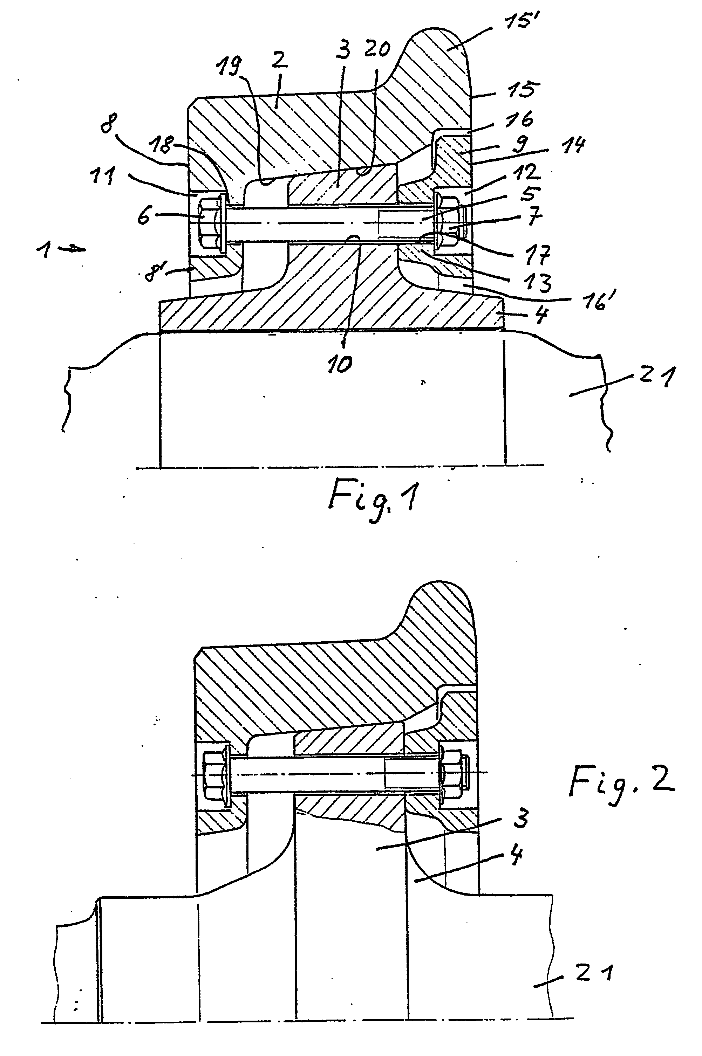

In den Figuren 1 und 2 sind zwei Ausführungsbeispiele gemäß der Erfindung dargestellt.

Fig. 1 zeigt im Querschnitt ein erfindungsgemäßes Rad als Teil eines Radsatzes, das sich insbesondere für die Nachrüstung bereits im Verkehr befindlicher Radsätze eignet, um beim Austausch verschlissener Räder die Radachsen mit den vorgegebenen Nabensitzen wiederverwenden zu können. Die Räder werden dabei mit Nabenschrumpfsitz auf den Nabensitzen der Radachse befestigt.

Fig. 1 zeigt ein Rad 1 mit einem Radreifen 2, einer Radscheibe 3 und einer Nabe 4. Von Schraubbolzen 5 mit Schraubköpfen 6 und Muttern 7 ist der Radreifen 2 mit seinem sich an seiner Außenflanke 8 zur Nabe 4 hin erstreckenden ringförmigen Ansatz 8' gegen eine Bremsscheibe 9 auf der Radscheibe 3 kraftschlüssig verspannt. Die Schraubbolzen 5 durchdringen die Radscheibe 3 in Bohrungen 10.

Die Schraubköpfe 6 sind in Bohrungen 11 des Ansatzes 8' und die Muttern 7 in Bohrungen 12 der Bremsscheibe 9 versenkt. Die Anzahl der Schraubbolzen 5, die auf einem Kreisbogen in der Mitte der Bremsscheibe mit gleichem Abstand zueinander angeordnet sind, kann beliebig gewählt werden.

Die Bremsscheibe 9 stützt sich mit Distanznocken 13 an der Radscheibe 3 derart ab, daß ihre eine radiale Ringreibfläche bildende Außenflanke 14 mit der Spurkranzflanke 15 fluchtet und zwischen Nabe 4 und Spurkranzflanke 15 jeweils einen Ringspalt 16, 16' offenläßt. Die Distanznocken 13 der Bremsscheibe 9 weisen von den Bohrungen 12 axial abgesetzte Bohrungen 17 auf, die mit weiteren von den Bohrungen 11 axial abgesetzten Bohrungen 18 des Ansatzes 8' fluchten. Beim Zusammenbau des Rades 1 werden die Schraubbolzen 5 durch die Bohrungen 18 des Ansatzes 8', die Bohrungen 10 der Radscheibe 3 und die Bohrungen 17 der Distanznocken 13 der Bremsscheibe 9 geführt. Mittels der Muttern 7 wird der Radreifen 2 von den Schraubbolzen 5 und den Schraubköpfen 6 mit seiner kegelstumpfförmigen Innenwandung 19 auf die entsprechend kegelstumpfförmig ausgebildete Außenringfläche 20 der Radscheibe 3 von der Radaußenseite her mit Kegelpaßsitz aufgezogen. Die zur Radachse 21 hin um 3 - 8° geneigte Außenringfläche 20 der Radscheibe 3 ermöglicht es, den Radreifen 2 gegen die Bremsscheibe 9 auf der Radscheibe 3 derart zu verspannen, daß bei angezogenen Schraubbolzen 5 die Außenflanke 14 der Bremsscheibe 9 mit der Spurkranzflanke 15 des Radreifens 2 fluchtet und ein kraftschlüssiger Paßsitz gewährleistet ist.

Fig. 2 zeigt im Querschnitt eine für die erstmalige Fertigung eines Radsatzes vorteilhafte Ausgestaltung des erfindungsgemäßen Rades im Querschnitt als Teil des Radsatzes.

Die Radnabe 4 und die zugehörige Radscheibe 3 des Rades 1 sind dabei mit der Radachse 21 einstückig. Bei einstückiger Ausgestaltung von Radnabe 4, Radscheibe 3 und Radachse 21 ist die Bremsscheibe 9 mittig in zwei Hälften geteilt.

Die Befestigung der Radreifen 2 auf den Radscheiben 3 erfolgt in der gleichen zu Fig. 1 beschriebenen Weise, so daß die weiteren Bezugszeichen der Fig. 2 mit denen der Fig. 1 identisch sind.

**Patentansprüche**

1. Scheibengebremstes Rad für kleinrädrige Schienenfahrzeuge, wie Niederflurwagen, mit einer Nabe (4), einer Radscheibe und einem mit der Radscheibe (3) lösbar verbundenem Radreifen (2), und mit den als Reibflächen ausgenutzten Seitenflanken (15) des Radreifens in einer Ebene zusammenwirkenden, mit axialem Abstand von der Radscheibe angeordneten und die Nabe mit radialem Abstand umgebenden radialen Ringreibflächen, von denen die auf der Radaußenseite angeordnete Ringreibfläche von der Außenflanke (8) eines sich zur Nabe hin erstreckenden umlaufenden ersten ringförmigen Körpers und die auf der Spurkranzseite angeordnete Ringreibfläche von der Außenflanke (14) eines zweiten ringförmigen Körpers gebildet sind, dessen Außendurchmesser geringer als der Innendurchmesser des Radreifens am Spurkranz ist, dadurch gekennzeichnet, daß

- der erste ringförmige Körper an der Radaußenseite als einstückiger Ansatz (8') am Radreifen (2) ausgebildet ist

- der Radreifen (2) von der Radaußenseite aus mit Kegelpaßsitz auf der Radscheibe (3) aufsitzt, wobei die Außenringfläche (20) der Radscheibe (3) kegelstumpfförmig und die Innenwandung (19) des Radreifens (2) entsprechend kegelstumpfförmig ausgebildet sind,

- der als Bremsscheibe (9) ausgebildete zweite ringförmige Körper an der Spurkranzseite sich über gleichmäßig auf einem Teilkreis verteilte Distanznocken (13) gegen die Radscheibe (3) abstützt, und

- die Bremsscheibe (9) und die Baueinheit Radreifen/Ansatz (2,8') mittels die Radscheibe (3) durchdringender axialer Schraubverbindungen gegeneinander und gegen die Radscheibe (3) verspannt sind.

2. Scheibengebremstes Rad nach Anspruch 1, dadurch gekennzeichnet, daß

- die Distanznocken (13) der Bremsscheibe (9) axial abgesetzte Bohrungen (12, 17) aufweisen, die mit weiteren axial abgesetzten Bohrungen (11, 18) des Ansatzes (8') fluchten,

- und daß die Schraubverbindungen von in die Bohrungen (17, 18) eingesetzten Schraubbolzen (5) gebildet werden, deren Länge kleiner ist als der axiale Abstand der Außenflanken (8, 15) des Radreifens und deren Schraubköpfe (6) und Muttern (7) in den abgesetzten Teilen (11, 12) der Bohrungen (17, 18) versenkt sind.

3. Schreibengebremstes Rad nach den Ansprüchen 1 und 2, dadurch gekennzeichnet, daß

- die Breite der Radscheibe (3) das 0,35- bis 0,40-fache der Breite des Radreifens (2) beträgt, - die sich kegelstumpfförmig zur Radaußenseite hin verjüngende Außenringfläche (20) der Radscheibe (3) zur Radachse (21) um 3 bis 8° geneigt ist,

- der mittlere Außendurchmesser der Radscheibe (3) das 0,75- bis 0,85-fache des Laufkreisdurchmessers des Radreifens (2) ist,

- und der Durchmesser der Radscheibe (3) am Einlauf in die Nabe (4) das 0,40- bis 0,45-fache des Laufkreisdurchmessers des Radreifens (2) beträgt.

4. Scheibengebremstes Rad nach den Ansprüchen 1 bis 3, dadurch gekennzeichnet, daß der Radreifen (2) mit dem Ansatz (8') als einstückiges Gesenkschmiedeteil ausgebildet ist.

5. Scheibengebremster Radsatz für kleinrädrige Schienenfahrzeuge mit zwei auf einer Radachse befestigten Rädern nach den Ansprüchen 1 bis 4, dadurch gekennzeichnet, daß die Naben (4) der Räder (1) mit Schrumpfsitz auf der Radachse (21) befestigt sind.

6. Scheibengebremster Radsatz für kleinrädrige Schienenfahrzeuge mit zwei auf einer Radachse befestigten Rädern nach den Ansprüchen 1 bis 4, dadurch gekennzeichnet, daß die Radnabe (4) eines jeden Rades (1) mit zugehöriger Radscheibe (3) und die Radachse (21) einstückig sind.

7. Radsatz nach Anspruch 6, dadurch gekennzeichnet, daß die Radnaben (4) mit Radscheiben (3) und die Radachse (21) aus einem Stück geschmiedet sind.

8. Scheibengebremstes Rad nach einem der Ansprüche 1 bis 7, dadurch gekennzeichnet, daß die Bremsscheibe (9) mittig in zwei Hälften geteilt ist.

**Claims**

1. A disc-braked wheel for small-wheeled rail vehicles, such as low-floor waggons, having: a hub (4); a wheel disc (3); a wheel tire (2) releasably connected to the wheel disc; and radial annular friction surfaces which cooperate in one plane with the lateral flanks (15), used as friction surfaces, of the wheel tire and are disposed at an axial distance from the wheel disc and enclose the hub at a radial distance, and of which the annular friction surface disposed on the outside of the wheel is formed by the outer flank (8) of a first rotating annular member extending in the direction of the hub, the annular friction surface disposed on the wheel flange side being formed by the outer flank (14) of a second annular member whose external diameter is smaller than the internal diameter of the wheel tire at the wheel flange, characterized in that:

– the first annular member is constructed on the outside of the wheel in the form of a one-piece attachment (8') on the wheel tire (2),

– the wheel tire (2) is fitted from the outside of the wheel with a taper fit on the wheel disc (3), the outer annular surface (20) of the wheel disc (3) being constructed frustoconical and the inner wall (19) of the wheel tire (2) correspondingly frustoconical,

– the second annular member, taking the form of a brake disc (9), on the wheel flange side bearing against the wheel disc (3) via spacer cams (13) distributed over a pitch circle, and

– the brake disc (9) and the structural unit formed by the wheel tire (2) and the attachment (8') are clamped against one another and against the wheel disc (3) by means of axial screwed connections extending through the wheel disc (3).

2. A disc-braked wheel according to claim 1, characterized in that:

– the spacer cams (13) of the brake disc (9) have axially offset bores (12, 17) which are in alignment with other axially offset bores (11, 18) of the attachment (8'),

– and the screwed connections are formed by screw bolts (5) which are inserted in the bores (17, 18) and whose length is smaller than the axial distance of the outer flanks (8, 15) of the wheel tire, their screw heads (6) and nuts (7) being countersunk in the offset portions (11, 12) of the bores (17, 18).

3. A disc-braked wheel according to claims 1 and 2, characterized in that:

– the width of the wheel disc (3) is 0.35 to 0.40 times the width of the wheel tire (2),

– the outer annular surface (20) of the wheel disc (3), tapering frustoconically in the direction of the outside of the wheel, is inclined by 3 to 8° to the wheel axle (21),

– the mean external diameter of the wheel disc (3) is 0.75 to 0.85 times the running circle diameter of the wheel tire (2),
– and the diameter of the wheel disc (3) where it enters the hub (4) is 0.40 to 0.45 times the running circle diameter of the wheel tire (2).

4. A disc-braked wheel according to claims 1 to 3, characterized in that the wheel tire (2) and the attachment (8') take the form of a one-piece drop forging.

5. A disc-braked wheel set for small-wheeled rail vehicles having two wheels attached to one wheel axle, according to claims 1 to 4, characterized in that the hubs (4) of the wheels (1) are attached to the wheel axle (21) by a shrink fit.

6. A disc-braked wheel set for small-wheeled rail vehicles having two wheels attached to one wheel axle, according to claims 1 to 4, characterized in that the wheel hub (4) of each wheel (1), with associated wheel disc (3), and the wheel axle (21) are unitary.

7. A wheel set according to claim 6, characterized in that the wheel hubs (4), with wheel discs (3), and the wheel axle (21) are forged in one piece.

8. A disc-braked wheel according to one of claims 1 to 7, characterized in that the brake disc (9) is divided into two halves in the centre.

**Revendications**

1. Roue freinée par disque pour véhicules ferroviaires à petites roues, comme des wagons à plateforme surbaissée, avec un moyeu (4), un disque de roue (3) et un bandage de roue (2) relié de manière amovible au disque de roue, et avec des surfaces de friction annulaires radiales coopérant dans un plan avec les flancs latéraux (15) du bandage de roue utilisés comme surfaces de friction, et entourant le moyeu à écartement radial, la surface de friction annulaire disposée sur la face extérieure de la roue étant formée par le flanc extérieur (8) d'un premier corps de forme annulaire rotatif s'étendant jusque vers le moyeu, et la surface de friction disposée sur la face du boudin étant formée par le flanc extérieur (14) d'un second corps de forme annulaire dont le diamètre extérieur est inférieur au diamètre intérieur du bandage de roue sur le boudin, caractérisée en ce que
– le premier corps de forme annulaire sur la face extérieure de la roue est constitué sous forme de saillie (8') d'une seule pièce sur le bandage de roue,
– le bandage de roue (2) est monté sur le disque de roue (3) à montage d'ajustement conique depuis la face extérieure de la roue, la surface annulaire extérieure (20) du disque de cône (3) étant constituée sous forme tronconique et la paroi intérieure (19) du bandage de roue (2) sous forme tronconique correspondante,
– le second corps de forme annulaire constitué sous forme de freinage (9) s'appuie, sur la face du boudin, contre le disque de roue (3) par des bossages d'écartement (13) répartis régulièrement sur un cercle primitif, et
– le disque de freinage (9) et l'unité constructive bandage de roue/saillie (2,8') sont haubanés l'un contre l'autre et contre le disque de roue (3) au moyen d'assemblages par vis axiales traversant le disque de roue (3).

2. Roue freinée par disque selon la revendication 1, caractérise en ce que
– les bossages d'écartement (13) du disque de freinage (9) présentent des alésages (12, 17) étagés axialement qui sont alignes avec d'autres alésages (11, 18) décalés axialement de la saillie (8'),
– et que les assemblages par vis sont formés par des boulons filetés (5) logés dans les alésages (17, 18), dont la longueur est inférieure à l'écartement axial des flancs extérieurs (8, 15) du bandage de roue et dont les têtes de vissage (6) et les écrous (7) sont noyés dans les parties étagées (11, 12) des alésages (17, 18).

3. Roue freinée par disque selon les revendications 1 et 2, caractérisée en ce que
– la largeur du disque de roue (3) est égale à 0,35 jusqu'à 0,40 fois la largeur du bandage de roue (2),
– la surface annulaire extérieure (20) du disque de roue (3) se rétrécissant tronconiquement en direction de la face extérieure de la roue est inclinée de 3 à 8 par rapport à l'axe de roue (21),
– le diamètre extérieur médian du disque de roue (3) est de 0,75 à 0,85 fois le diamètre du cercle de roulement du bandage de roue (2),
– et le diamètre du disque de roue (3) à l'entrée dans le moyeu (4) est égal à 0,40 à 0,45 fois le diamètre du cercle de roulement du bandage de roue (2).

4. Roue freinée par disque selon les revendications 1 à 3, caractérisée en ce que le bandage de roue (2) avec la saillie (8') est réalisé sous forme de pièce matricée monobloc.

5. Paire de roues freinées par disque pour véhicules ferroviaires à petites roues avec deux roues selon les revendications 1 à 4 fixées sur un axe de roue, caractérisée en ce que les moyeux (4) des roues (1) sont fixés sur l'axe de roue (21) à ajustement fretté.

6. Paire de roues freinées par disque pour véhicules ferroviaires à petites roues avec deux roues selon les revendications 1 à 4 fixées sur un axe de roue, caractérisée en ce que le moyeu de roue (4) de chaque roue (1) est d'une seule pièce avec le disque de roue (3) adjoint et l'axe de roue (21).

7. Paire de roues selon la revendication 6, caractérisée en ceu que les moyeux de roue (4) sont forgés en une seule pièce avec des disques de roue (3) et l'axe de roue (21).

8. Roue freinée par disque selon l'une des revendications 1 à 7, caractérisée en ce que le disque de freinage (9) est divisé centralement en deux moitiés.

Fig. 1

Fig. 2